# EUROPEAN PATENT SPECIFICATION

(11) **EP 1 725 503 B1**
(45) Date of publication and mention of the grant of the patent: **02.07.2008**
(21) Application number: 05798383.5
(22) Date of filing: 26.10.2005
(51) Int. Cl.: C03C 13/00, C03B 37/04

(54) **MODIFICATION OF ALKALINE EARTH SILICATE FIBRES**
MODIFIZIERUNG VON ERDALKALIMETALLSILICATFASERN
TRANSFORMATION DE FIBRES DE SILICATE ALCALINO-TERREUX

(30) Priority: 01.11.2004 GB 0424190; 09.02.2005 GB 0502701; 15.09.2005 US 717516 P
(43) Date of publication of application: 29.11.2006
(60) Divisional application: 08151094.3
(73) Proprietor: THE MORGAN CRUCIBLE COMPANY PLC, Windsor, Berkshire SL4 1LP (GB)
(72) Inventor: FREEMAN, Craig, John, Bromborough, Wirral CH62 3PH (GB); JUBB, Gary, Anthony, Bromborough, Wirral CH62 3PH (GB)
(74) Representative: Boff, James Charles
(86) International application number: PCT/GB2005/004149
(87) International publication number: WO 2006/048610

(56) References cited:
- EP-A- 1 288 172
- EP-A- 1 561 732
- WO-A-03/059835
- WO-A-03/060016
- GB-A- 1 391 384
- US-A- 4 882 302
- US-A- 5 994 247

## Description

This invention relates to alkaline earth silicate fibres.

Inorganic fibrous materials are well known and widely used for many purposes (e.g. as thermal or acoustic insulation in bulk, mat, or blanket form, as vacuum formed shapes, as vacuum formed boards and papers, and as ropes, yarns or textiles; as a reinforcing fibre for building materials; as a constituent of brake blocks for vehicles). In most of these applications the properties for which inorganic fibrous materials are used require resistance to heat, and often resistance to aggressive chemical environments.

Inorganic fibrous materials can be either glassy or crystalline. Asbestos is an inorganic fibrous material one form of which has been strongly implicated in respiratory disease.

It is still not clear what the causative mechanism is that relates some asbestos with disease but some researchers believe that the mechanism is mechanical and size related. Asbestos of a critical size can pierce cells in the body and so, through long and repeated cell injury, have a bad effect on health. Whether this mechanism is true or not regulatory agencies have indicated a desire to categorise any inorganic fibre product that has a respiratory fraction as hazardous, regardless of whether there is any evidence to support such categorisation. Unfortunately for many of the applications for which inorganic fibres are used, there are no realistic substitutes.

Accordingly there is a demand for inorganic fibres that will pose as little risk as possible (if any) and for which there are objective grounds to believe them safe.

A line of study has proposed that if inorganic fibres were made that were sufficiently soluble in physiological fluids that their residence time in the human body was short; then damage would not occur or at least be minimised. As the risk of asbestos linked disease appears to depend very much on the length of exposure this idea appears reasonable. Asbestos is extremely insoluble.

As intercellular fluid is saline in nature the importance of fibre solubility in saline solution has long been recognised. If fibres are soluble in physiological saline solution then, provided the dissolved components are not toxic, the fibres should be safer than fibres which are not so soluble. Alkaline earth silicate fibres have been proposed for use as saline soluble, non-metallic, amorphous, inorganic oxide, refractory fibrous materials. The invention particularly relates to glassy alkaline earth silicate fibres having silica as their principal constituent.

International Patent Application No. WO87/05007 disclosed that fibres comprising magnesia, silica, calcia and less than 10 wt% alumina are soluble in saline solution. The solubilities of the fibres disclosed were in terms of parts per million of silicon (extracted from the silica containing material of the fibre) present in a saline solution after 5 hours of exposure. WO87/05007 stated that pure materials should be used and gave an upper limit of 2wt% in aggregate to the impurities that could be present. No mention of alkali metals was made in this patent.

International Patent Application No. WO89/12032 disclosed additional fibres soluble in saline solution and discusses some of the constituents that may be present in such fibres. This disclosed the addition of Na₂O in amounts ranging from 0.28 to 6.84wt% but gave no indication that the presence of Na₂O had any effect.

European Patent Application No. 0399320 disclosed glass fibres having a high physiological solubility and having 10-20mol% Na₂O and 0-5mol% K₂O. Although these fibres were shown to be physiologically soluble their maximum use temperature was not indicated.

Further patent specifications disclosing selection of fibres for their saline solubility include for example European 0412878 and 0459897, French 2662687 and 2662688, PCT WO86/04807, WO90/02713, WO92/09536, WO93/22251, WO94/15883, WO97/16386 and United States 5250488.

The refractoriness of the fibres disclosed in these various prior art documents varies considerably and for these alkaline earth silicate materials the properties are critically dependent upon composition.

As a generality, it is relatively easy to produce alkaline earth silicate fibres that perform well at low temperatures, since for low temperature use one can provide additives such as boron oxide to ensure good fiberisation and vary the amounts of the components to suit desired material properties. However, as one seeks to raise the refractoriness of alkaline earth silicate fibres, one is forced to reduce the use of additives since in general (albeit with exceptions) the more components are present, the lower the refractoriness.

WO93/15028 disclosed fibres comprising CaO, MgO, SiO₂, and optionally ZrO₂ as principal constituents. Such fibres are frequently known as CMS (calcium magnesium silicate) or CMZS ((calcium magnesium zirconium silicate) fibres. WO93/15028 required that the compositions used should be essentially free of alkali metal oxides. Amounts of up to 0.65wt% were shown to be acceptable for materials suitable for use as insulation at 1000°C. WO93/15028 also required low levels of Al₂O₃ (<3.97%).

WO94/15883 disclosed a number of such fibres usable as refractory insulation at temperatures of up to 1260°C or more. As with WO93/15028, this patent required that the alkali metal oxide content should be kept low, but indicated that some alkaline earth silicate fibres could tolerate higher levels of alkali metal oxide than others. However, levels of 0.3% and 0.4% by weight Na₂O were suspected of causing increased shrinkage in materials for use as insulation at 1260°C. The importance of keeping the level of alumina low was stressed is stressed in this document.

WO97/16386 disclosed fibres usable as refractory insulation at temperatures of up to 1260°C or more. These fibres comprised MgO, SiO₂, and optionally ZrO₂ as principal constituents. These fibres are stated to require substantially no alkali metal oxides other than as trace impurites (present at levels of hundredths of a percent at most calculated as alkali metal oxide). The fibres have a general composition

| | |
|---|---|
| SiO₂ | 65-86% |
| MgO | 14-35% |

with the components MgO and SiO₂ comprising at least 82.5% by weight of the fibre, the balance being named constituents and viscosity modifiers. Such magnesium silicate fibres may comprise low quantities of other alkaline earths. The importance of keeping the level of alumina low was stressed is stressed in this document.

WO2003/059835 discloses certain calcium silicate fibres certain calcium silicate compositions for which fibres show a low reactivity with aluminosilicate bricks, namely:-
65%<SiO₂ <86%
MgO < 10%
14% < CaO < 28%
Al₂O₃ <2%
ZrO₂ <3%
B₂O₃ <5%
P₂O₅ <5%
72% <SiO₂+ZrO₂+B₂O₃+5*P₂O₅
95% < SiO₂ + CaO + MgO + Al₂O₃ +ZrO₂ + B₂O₃ + P₂O₅
This patent also discloses the use of La₂O₃ or other lanthanide additives to improve the strength of the fibres and blanket made from the fibres. This patent application does not mention alkali metal oxide levels, but amounts in the region of ∼0.5wt% were disclosed in fibres intended for use as insulation at up to 1260°C or more.

WO2003/060016 claims a low shrinkage, high temperature resistant inorganic fiber having a use temperature up to at least 1330 C, which maintains mechanical integrity after exposure to the use temperature and which is non-durable in physiological fluids, comprising the fiberization product of greater than 71.25 to about 85 weight percent silica, 0 to about 20 weight percent magnesia, about 5 to about 28.75 weight percent calcia, and 0 to about 5 weight percent zirconia, and optionally a viscosity modifier in an amount effective to render the product fiberizable.

EP 1323687 claims a biosoluble ceramic fiber composition for a high temperature insulation material comprising 75-80 wt% of SiO₂, 13-25 wt% of CaO, 1-8 wt% of MgO, 0.5-3 wt% of ZrO₂ and 0-0.5 wt% of Al₂O₃, wherein (ZrO₂ + Al₂O₃) is contained 0.5-3 wt% and (CaO + MgO) is contained 15-26 wt%.

GB1391384 discloses fibres that include alkali metal oxides as intended ingredients but also includes high amounts of alumina.

EP1561732 discloses alkaline earth silicate fibres comprising alkali metal additives and in one example discloses a fibre in which potassium is the only alkali metal additive. This one example is disclaimed in the accompanying claims.

Alkaline earth silicate fibres have received a definition in the Chemical Abstract Service Registry [Registry Number: 436083-99-7] of:-
"*chemical substances manufactured in the form offibers. This category encompasses substances produced by blowing or spinning a molten mixtures of alkaline earth oxides, silica and other minor*/*trace oxides. It melts around 1500°C (2732°F). It consists predominantly of silica (50-82 wt%), calcia and magnesia (18-43 wt%), alumina, titania and zirconia (<6 wt%), and trace oxides*.".

This definition reflects European Health and Safety regulations which impose special labelling requirements on silicate fibres containing less than 18% alkaline earth oxides.

However as is clearly indicated in relation to WO2003/059835, WO2003/060016 and EP 1323687, the silica content of alkaline earth silicate fibres is increasing with the demand for higher use temperatures and this is leading to lower alkaline earth contents.

The present invention is applicable not only to alkaline earth silicate fibres in this narrow definition reflected in the Chemical Abstracts definition, but also to alkaline earth silicate fibres having lower levels of alkaline earth oxides.

Accordingly, in the present specification alkaline earth silicate fibres should be considered to be materials comprising predominantly of silica and alkaline earth oxides and comprising less than 10wt% alumina [as indicated in WO87/45007 - which first introduced such fibres], preferably in which alumina, zirconia and titania amount to less that wt% [as indicated in the Chemical Abstracts definition]. For regulatory reasons, preferred materials contain more than 18% alkaline earth metal oxides.

The prior art shows that for refractory alkaline earth silicate fibres, alkali metals have been considered as impurities that can be tolerated at low levels but which have detrimental affects on refractoriness at higher levels.

The applicant has found that contrary to received wisdom in the field of refractory alkaline earth silicate fibres, the addition of minor quantities of alkali metals within a certain narrow range improves the mechanical quality of fibres produced (in particular fibre strength) without appreciably damaging the refractoriness of the fibres and further, that potassium is particularly effective in this role.

Accordingly, the present invention provides a method of making refractory alkaline earth silicate fibres from a melt as set out in Claims 1 to 22, refractory alkaline earth silicate fibres as set out in Claims 23 to 50, and thermal insulation as set out in Claims 51-52.

The method requires the inclusion as an intended melt component of alkali metal, in which at least 75mol% of the alkali metal is potassium. This results in improvement to the mechanical and/or thermal properties of the fibre in comparison with a fibre free of alkali metal.

Preferably, the amount of alkali metal (M) expressed as the oxide M₂O is greater than 0.2 mol% and preferably in the range 0.2 mol% to 2.5 mol%, more preferably 0.25 mol% to 2 mol%.

By "a fibre free of alkali metal" is meant a fibre in which all other components are present in the same proportions but which lacks alkali metal.

The alkali metal is preferably present in an amount sufficient to increase the tensile strength of a blanket made using the fibre by >50% over the tensile strength a blanket free of alkali metal, and less than an amount that will result in a shrinkage as measured by the method described below of greater than 3.5% in a vacuum cast preform of the fibre when exposed to 1260°C for 24 hours.

It will be apparent that the alkali metal may be provided either as an additive to the melt (preferably in the form of an oxide), or by using as ingredients of the melt appropriate amounts of materials containing alkali metal as a component or impurity, or both as an additive and as a component or impurity. The invention lies in ensuring that the melt has the desired quantity of alkali metal to achieve the beneficial effects of the invention.

The invention may be applied to all of the prior art alkaline earth silicate compositions mentioned above.

The scope and further features of the invention will become apparent from the claims in the light of the following illustrative description and with reference to the drawings in which:-
Fig. 1 is a graph showing tensile strength/density plotted against melt stream temperatures as determined in a production trial for a number of fibres of differing Na₂O content ;
Fig. 2 is a graph plotting maximum, average, and minimum values of tensile strength/density against Na₂O content for the same fibres;
Fig. 3 is a graph of experimentally determined temperature/viscosity curves for a range of compositions;
Fig. 4 is a graph showing shot content plotted against Na₂O content for the fibres of Fig. 1
Fig. 5 is a graph of shot content against Na₂O content for a different range of alkaline earth silicate fibres
Fig. 6 is a graph of linear shrinkages for alkaline earth silicate fibres of varying composition, compared with known refractory ceramic fibre (RCF) fibres
Fig. 7 is a graph of the effect on blanket strength of sodium addition to a range of alkaline earth silicate fibres
Fig 8 contrasts micrographs showing various fibres after exposure to a range of temperatures
Fig. 9 is a graph comparing measured thermal conductivities for a range of fibres.

The inventors produced fibre blanket using a production trial line at their factory in Bromborough, England. Fibre was produced by forming a melt and allowing the melt to fall onto a pair of spinners (as is conventionally known).

The base melt had a nominal composition in weight percent:-

| | |
|---|---|
| SiO₂ | 73.5 |
| CaO | 25 |
| La₂O₃ | 1.5 |

with other components forming minor impurities and sodium oxide being added in specified amounts.

The melt stream temperature was monitored using a two colour pyrometer.

Fibres produced from the spinners were passed onto a conveyer and then needled to form blanket in a conventional manner.

The blanket thickness, density, and tensile strength were measured for fibres produced using a range of conditions.

The blanket was produced with a view to determining the effect on fibre quality of melt stream temperature, since it was believed that this had an effect on fibre quality.

The inventors also decided to add alkali metal oxides with the view of flattening the viscosity-temperature curve of the melt as this was thought a relevant factor in fibre production as explained further below.

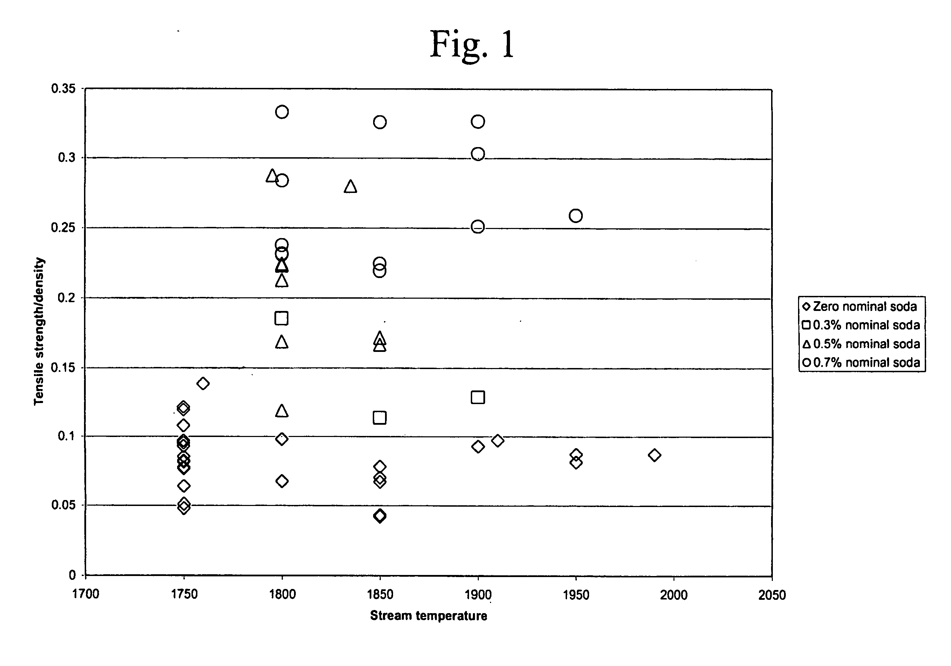

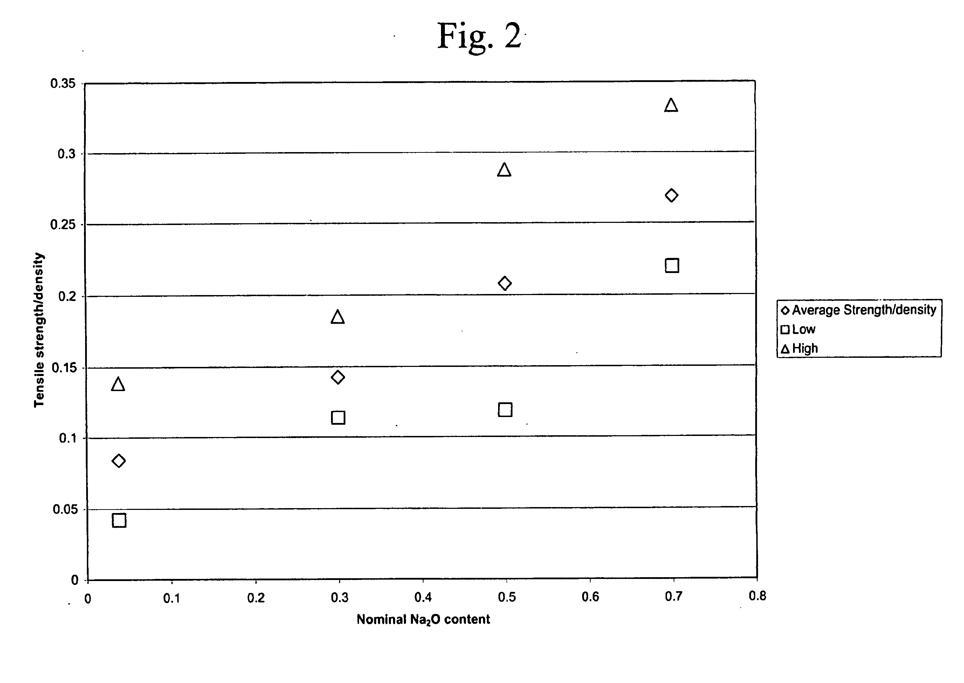

The results of these tests are set out in Table 1 and illustrated graphically in Figs. 1 and 2. In Table 1, the melt stream temperature, blanket thickness, blanket density, tensile strength and tensile strength divided by density is shown for all compositions. [The tensile strength divided by density is calculated to counteract the variation attributable to different amounts of material being in the blanket]. Also for selected compositions the shrinkage of a preform at 1150°C and 1250°C was measured in the same manner as in W02003/059835.

The first thing that is noteworthy is that the blanket strengths show a high variability. This is because the manufacture of a blanket involves many variables, including:-
- Composition of the melt
- Temperature of the melt
- Melt stream temperature
- Shot content (melt that has solidified in the form of droplets rather than fibres)
- Fibre diameter
- Fibre length
- Needling conditions
- Post-solidification thermal history

By producing a range of fibres on a single line and significantly varying only melt stream temperature and composition (each of which will have an affect on shot content, fibre diameter and fibre length) it was hoped to reduce such variability. However because a blanket is an aggregated body of individual fibres, there is inevitably a statistical variation in such aggregate properties as tensile strength.

As can be seen from Fig. 1 there appears to be relatively little variation in strength with melt stream temperature, but since the range of melt stream temperatures chosen was selected to encompass ranges previously found to be effective, this is not surprising.

However, it can be seen that with progressive increases in Na₂O content, the strength tends to increase. Fig. 2 shows the maximum, minimum, and average strengths found for a range of compositions and it can be seen that blanket strength shows a strong positive correlation with Na₂O content. In contrast, the shrinkage of the fibres seemed barely affected.

The fibres with nominal zero Na₂O content of course had minor trace amounts (average measured content 0.038% - maximum 0.11%). Extrapolating back to zero Na₂O gives an average tensile strength/density of 0.0675 kPa/[kg/m³]. The average tensile strength/density for the addition of 0.3% Na₂O is 0.1426. The increase in blanket strength is over 100% and smaller additions (e.g. 0.25 mol%) would be expected to exceed a 50% improvement.

| Table 1 - Background | | | | | | |
|---|---|---|---|---|---|---|
| Melt Stream Temperature °C | Blanket thickness (mm) | Blanket density (kg/m³) | % linear shrinkage 1150°C/24 hours | % linear shrinkage 1250°C/24 hours | Tensile Strength kPa (average of three measurements) | Tensile strength/ density |
| Zero nominal Na₂O content | | | | | | |
| 1750 | 7.20 | 118 | | | 5.67 | 0.048023 |
| 1750 | 8.18 | 109 | | | 8.33 | 0.076453 |
| 1750 | 16.87 | 161 | | | 15.33 | 0.095238 |
| 1750 | 15.12 | 169 | | | 15.67 | 0.092702 |
| 1750 | 15.71 | 134 | | | 16.00 | 0.119403 |
| 1750 | 20.51 | 141 | | | 13.67 | 0.096927 |
| 1750 | 19.14 | 138 | | | 11.33 | 0.082126 |
| 1750 | 18.58 | 125 | | | 9.67 | 0.077333 |
| 1750 | 18.87 | 141 | | | 12.00 | 0.085106 |
| 1750 | 25.92 | 130 | | | 14.00 | 0.107692 |
| 1750 | 24.49 | 140 | | | 17.00 | 0.121429 |
| 1750 | 15.88 | 166 | | | 13.47 | 0.081124 |
| 1750 | 17.34 | 144 | | | 7.33 | 0.050926 |
| 1750 | 11.00 | 174 | | | 16.20 | 0.093103 |
| 1750 | 22.01 | 124 | 0.52 | 0.88 | 7.91 | 0.06379 |
| 1760 | 16.60 | 133 | | | 18.47 | 0.138847 |
| 1800 | 8.06 | 129 | | | 8.67 | 0.067183 |
| 1800 | 22.04 | 132 | | | 12.92 | 0.097904 |
| 1800 | 21.97 | 139 | | | 13.62 | 0.09801 |
| 1850 | 7.75 | 120 | | | 9.33 | 0.077778 |
| 1850 | 18.49 | 133 | | | 9.31 | 0.069962 |
| 1850 | 18.12 | 128 | | | 8.56 | 0.066901 |
| 1850 | 17.19 | 123 | | | 5.33 | 0.043333 |
| 1850 | 24.49 | 125 | | | 5.26 | 0.042107 |
| 1900 | 21.83 | 114 | | | 10.57 | 0.092708 |
| 1910 | 8.50 | 127 | | | 12.33 | 0.097113 |
| 1950 | 8.14 | 115 | | | 9.33 | 0.081159 |
| 1950 | 8.92 | 115 | | | 10.00 | 0.086957 |
| 1990 | 19.39 | 123 | | | 10.67 | 0.086764 |

| 0.3wt% nominal Na₂O content | | | | | | |
|---|---|---|---|---|---|---|
| 1800 | 22.82 | 107 | | | 19.83 | 0.185327 |
| 1850 | 17.10 | 149 | | | 16.91 | 0.113512 |
| 1900 | 24.40 | 137 | | | 17.66 | 0.128881 |

| 0.5wt% nominal Na₂O content | | | | | | |
|---|---|---|---|---|---|---|
| 1795 | 20.32 | 169 | 0.43 | 1.70 | 48.64 | 0.287811 |
| 1800 | 19.98 | 147 | | | 24.81 | 0.168913 |
| 1800 | 25.25 | 136 | | | 16.17 | 0.118922 |
| 1800 | 18.64 | 153 | | | 34.24 | 0.223769 |
| 1800 | 18.02 | 190 | | | 42.65 | 0.224456 |
| 1800 | 24.22 | 175 | | | 37.26 | 0.212895 |
| 1800 | 22.47 | 165 | | | 36.83 | 0.223212 |
| 1835 | 14.54 | 150 | | | 42.01 | 0.280067 |
| 1850 | 23.50 | 164 | 0.31 | 1.04 | 27.29 | 0.166789 |
| 1850 | 25.15 | 162 | | | 27.85 | 0.171681 |

| 0.7wt% nominal Na₂O content | | | | | | |
|---|---|---|---|---|---|---|
| 1800 | 21.91 | 166 | | | 47.12 | 0.283835 |
| 1800 | 21.25 | 166 | | | 38.32 | 0.230863 |
| 1800 | 18.44 | 161 | | | 53.64 | 0.333188 |
| 1800 | 19.22 | 163 | | | 38.74 | 0.237669 |
| 1800 | 19.95 | 144 | 0.48 | 1.11 | 33.35 | 0.231597 |
| 1850 | 26.04 | 175 | 0.48 | 0.90 | 38.41 | 0.219467 |
| 1850 | 23.48 | 166 | | | 54.11 | 0.325984 |
| 1850 | 27.73 | 165 | | | 37.03 | 0.224404 |
| 1900 | 29.30 | 166 | | | 41.69 | 0.251165 |
| 1900 | 21.16 | 135 | | | 44.09 | 0.326617 |
| 1900 | 19.49 | 135 | | | 40.93 | 0.30316 |
| 1950 | 25.88 | 151 | | | 39.12 | 0.259073 |

Encouraged by this, and with a view to determining the upper limit of alkali metal oxide that was appropriate, the inventors produced a range of further alkaline earth silicate fibres using an experimental rig in which a melt was formed of appropriate composition, tapped through a 8-16 mm orifice, and blown to produce fibre in a known manner. (The size of the tap hole was varied to cater for the viscosity of the melt - this is an adjustment that must be determined experimentally according to the apparatus and composition used). Shrinkage of preforms of the fibre at 1150°C and 1250°C were measured in the same manner as in W02003/059835. Total solubility in ppm of the major glass components after a 24 hour static test in a physiological saline solution were also measured for some of the examples.

The results of these studies are shown in Table 2. The fibres in the left of the table were aimed at assessing the effect of adding approximately equimolar amounts of alkali metal addition to calcium silicate fibre containing La₂O₃ (as in W02003/059835), whereas those to the right were aimed at assessing the effect of varying the quantity of Na₂O in such a fibre. While not conclusive, the results indicate that for these fibres Na₂O and K₂O show shrinkages no worse or even better than fibre free of Na₂O, whereas Li₂O appears detrimental to shrinkage.

However, this latter conclusion is thought unsafe since it was determined that the lithium had been added in the form of lithium tetraborate, and the boron addition may have had a significant effect. Until proven otherwise, the applicants are assuming that the absolute amount of alkali metal may vary from metal to metal and fibre to fibre. The solubility figures show that total solubility is slightly increased by the addition of alkali metal oxide.

**Table 2 - Background**

| Sample | PAT STD 01 | PAT Na₂O 02 | PAT Li₂O 03 | PAT K₂O 04 | BG-X-04-0305 | BG-X-04-0277 | BG-X-04-0279 |
|---|---|---|---|---|---|---|---|
| Component | | | | | | | |
| Na₂O | 0.26 | 0.95 | 0.12 | 0.24 | 0.6 | 0.72 | 1.14 |
| MgO | 0.38 | 0.39 | 0.36 | 0.36 | 0.35 | 0.38 | 0.36 |
| Al₂O₃ | 0.6 | 0.64 | 0.56 | 0.62 | 0.38 | 0.02 | 0 |
| SiO₂ | 72.58 | 72.47 | 72.43 | 72.40 | 73.26 | 73.58 | 73.76 |
| K₂O | 0.08 | 0.08 | 0.07 | 1.05 | 0.07 | 0.08 | 0.08 |
| CaO | 24.05 | 23.27 | 23.62 | 22.67 | 22.82 | 23.52 | 23.22 |
| TiO₂ | 0.1 | 0.10 | 0.11 | 0.15 | 0.1 | 0.1 | 0.1 |
| Fe₂O₃ | 0.16 | 0.19 | 0.21 | 0.23 | 0.16 | 0.18 | 0.18 |
| La₂O₃ (estimated) | 1.3 | 1.3 | 1.3 | 1.3 | 1.3 | 1.3 | 1.3 |
| Li₂O | | | 0.34* | | | | |

| % Linear Shrinkage | | | | | | | |
|---|---|---|---|---|---|---|---|
| 850°C/24 hours | | | | | 0.38 | 0.21 | 0.22 |
| 1150°C/24 hours | 1.05 | 0.88 | 1.58 | 0.63 | 0.47 | 0.36 | 0.59 |
| 1250°C/24 hours | 1.08 | 1.08 | 1.71 | 0.79 | 0.48 | 0.69 | 0.84 |

| % Thickness shrinkage | | | | | | | |
|---|---|---|---|---|---|---|---|
| 850°C/24 hours | | | | | 0.42 | 0.71 | 1.31 |
| 1150°C/24 hours | | | | | 0.93 | 0.71 | 1.44 |
| 1250°C/24 hours | | | | | 0.91 | 0.72 | 6.43 |

| Static Solubility 24hrs (ppm) | | | | | | | |
|---|---|---|---|---|---|---|---|
| | 191 | 202 | 200 | N/A | | | |

The right side of Table 2 shows firstly that only a ∼1% higher silica content has a big effect on shrinkage, giving a much lower shrinkage. For these fibres, linear shrinkage at 850°C/24hrs seemed unaffected by all soda additions tested, however the same is not true for thickness shrinkage, although it is still low. At 1150°C/24hrs there is a slight increase in both linear and through thickness shrinkage, but at 1250°C/24hrs through thickness whilst still acceptable grows more significantly for the highest soda addition. All of these figures are acceptable for some applications whereas other applications could not tolerate the highest Na₂O level tested.

The improvement in shrinkage with higher silica levels led the inventors to look to materials containing still higher silica levels and the results are set out in Table 3 below.

**Table 3 - Background**

| Sample | PAT Na₂O 05 | PAT Na₂O 06 | PAT Na₂O 07 | PAT Na₂O 08 | PAT Na₂O 09 | PAT Na₂O 10 |
|---|---|---|---|---|---|---|
| Component | | | | | | |
| Na₂O | 0.5 | 0.5 | 0.5 | 0.5 | 0.5 | 1.1 |
| MgO | 0.4 | 0.3 | 0.3 | 0.4 | 0.3 | 0.4 |
| Al₂O₃ | 0.6 | 0.5 | 0.6 | 0.8 | 0.6 | 0.8 |
| SiO₂ | 73.9 | 74.3 | 74.5 | 75.2 | 76.3 | 77.7 |
| K₂O | 0.1 | 0.1 | 0.1 | 0.1 | 0.1 | 0.1 |
| CaO | 23.6 | 22.9 | 22.6 | 22.0 | 21.4 | 19.3 |
| TiO₂ | 0.1 | 0.1 | 0.1 | 0.1 | 0.1 | 0.1 |
| Fe₂O₃ | 0.2 | 0.2 | 0.2 | 0.2 | 0.2 | 0.2 |
| La₂O₃ | 1.3 | 1.3 | 1.3 | 1.3 | 1.3 | 1.3 |

| % Linear Shrinkage | | | | | | |
|---|---|---|---|---|---|---|
| 1150°C/24hrs | 0.54 | 0.8 | 0.61 | 0.56 | 0.65 | 0.58 |
| 1250°C/24hrs | 1.1 | 1.07 | N/A | 0.84 | 0.86 | N/A |

| Static Solubility 24hrs (ppm) | | | | | | |
|---|---|---|---|---|---|---|
| | 199 | 208 | 165 | 194 | 245 | 107 |

These results show low shrinkage and a reasonably high solubility across the range. It appears that addition of alkali metal oxide may increase the amount of silica that can be added to produce a workable alkaline earth silicate fibre, and perhaps with an acceptable solubility. This is of great significance since, in general, increasing silica content permits higher use temperatures for alkaline earth silicate fibres.

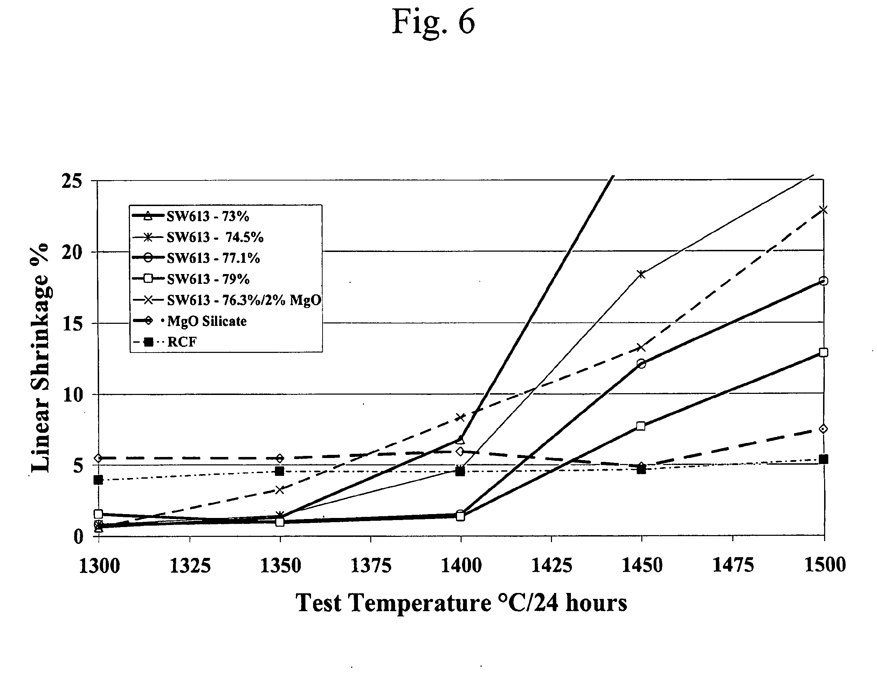

Fig. 6 shows the shrinkage at various temperatures of preforms of a range of alkaline earth silicate fibres. The reference SW613 refers to lanthanum containing materials of composition similar to those set out in Table 3 with varying silica contents as indicated but absent any alkali metal addition. [Silica and calcia comprising most of the material with lanthanum oxide being present in about 1.3%]. One of these fibres also has an addition of 2wt% MgO. Also shown are shrinkages for a conventional aluminosilicate fibre (RCF) and a magnesium silicate fibre (MgO Silicate).

It can be seen that all of the SW613 fibres have a shrinkage lower than that of RCF and the MgO silicate fibres up to 1350°C but rise thereafter. However, there is a progressive increase in refractoriness with increasing silica content. For the SW613 fibre containing 77 and 79% SiO₂, the shrinkage remains below that of RCF and the MgO silicate fibres up to 1400°C and better could be expected for higher silica contents. In contrast, it can be seen also that addition of 2% MgO to the SW613 compositions is detrimental to shrinkage. High silica alkaline earth silicate fibres are difficult to make and addition of alkali metals to such compositions should improve the quality of such fibres and ease manufacture.

Having shown such effects the applicants conducted a trial to make blanket on a production line, to see whether the initial results on shrinkage were confirmed. A base composition comprising:-

| | |
|---|---|
| SiO₂ | 72.5 - 74wt% |
| CaO | 24 - 26.5wt% |
| MgO | 0.4 - 0.8wt% |
| Al₂O₂ | <0.3wt% |
| La₂O₃ | 1.2-1.5wt% |

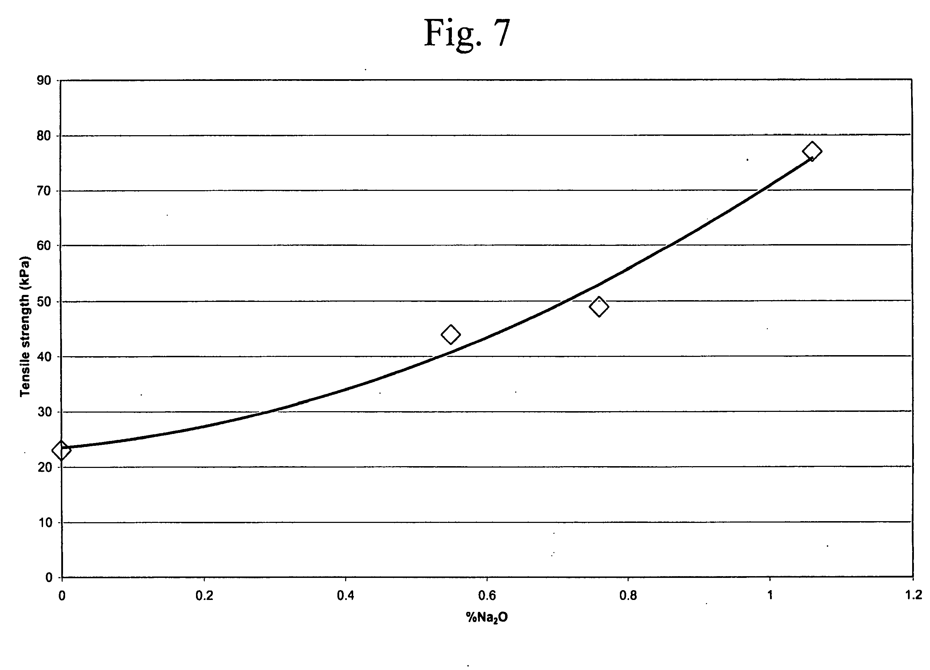

was used and varying amounts of Na₂O were added. Blanket having a density 128kg/m³ was produced having a thickness of ∼25mm. The results, summarised in Fig. 7, show a dramatic increase in blanket strength with Na₂O addition.

These findings relate to compositions containing La₂O₃ as a component, but similar effects of alkali metal additions are found with alkaline earth silicate fibres not containing La₂O₃ as a component.

The inventors also tested other alkaline earth silicate fibres comprising predominantly magnesium as the alkaline earth component (magnesium silicate fibres) and the results are set out in Table 4.

This table shows that whereas Na₂O and K₂O have a small or large respectively detrimental effect on shrinkage, Li₂O has hardly any effect on shrinkage. This does not imply no effect at all, the inventors observed that whereas the fibres with Na₂O and K₂O were similar to fibres without such additives (coarse) the fibre with Li₂O addition was significantly finer and of better quality. At lower quantities, Na₂O and K₂O may still give shrinkages that are tolerable in most applications.

**Table 4 - Background**

| Sample | 04 MgO 01 | 04 MgO 02 | 04 MgO 03 | 04 MgO 04 |
|---|---|---|---|---|
| Component | | | | |
| Na₂O | 0.0 | 0.5 | 0.0 | 0.0 |
| MgO | 20.0 | 19.1 | 19.6 | 18.3 |
| Al₂O₃ | 1.7 | 2.0 | 1.8 | 1.7 |
| SiO₂ | 77.6 | 77.5 | 77.8 | 78.2 |
| K₂O | 0.0 | 0.0 | 0.0 | 1.0 |
| CaO | 0.5 | 0.5 | 0.6 | 0.5 |
| TiO₂ | 0.1 | 0.1 | 0.1 | 0.1 |
| Fe₂O₃ | 0.5 | 0.5 | 0.5 | 0.5 |
| Li₂O | | | 0.3 | |

| % Linear Shrinkage | | | | |
|---|---|---|---|---|
| 1150°C/24hrs | 2.53 | 3.53 | 2.34 | 5.59 |
| 1250°C/24hrs | 2.16 | 3.57 | 2.3 | 9.94 |

| Static Solubility 24hrs (ppm) | | | | |
|---|---|---|---|---|
| | 297 | N/A | 331 | N/A |

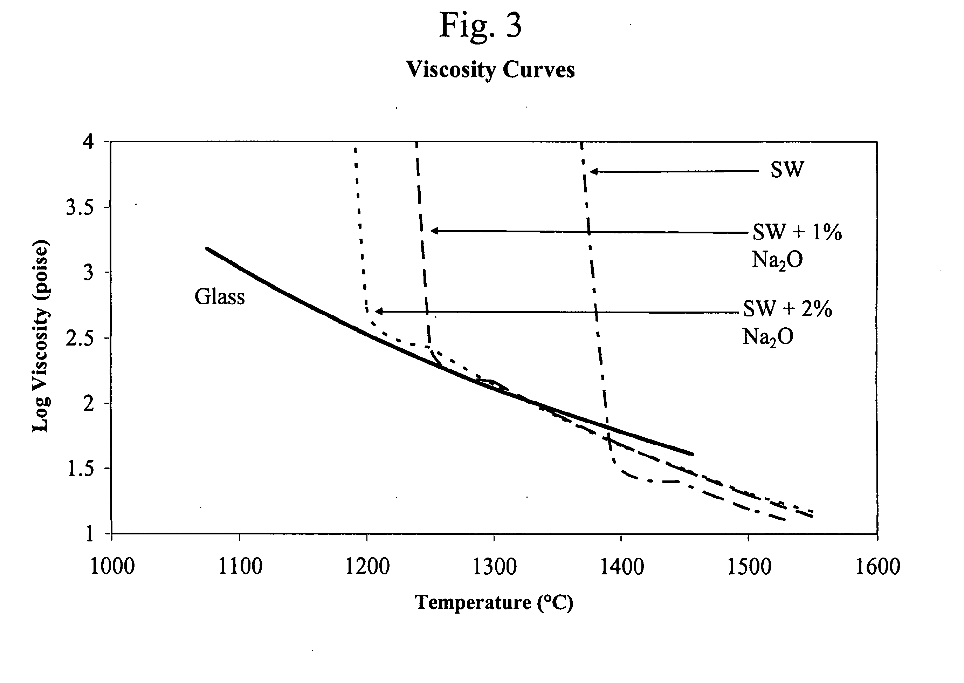

The purpose of adding alkali metal is to try to alter the viscosity temperature curve for alkaline earth silicates so as to provide a more useful working range for the silicates. Fig. 3 shows a graph experimental viscosity/temperature curves for:-
• a high soda glass having the approximate composition in wt%:-

| | |
|---|---|
| SiO₂ | 68 |
| Na₂O | 13.4 |
| CaO | 7.94 |
| B₂O₃ | 4.74 |
| MgO | 2.8 |
| Al₂O₃ | 2.66 |
| Fe₂O₃ | 1.17 |
| TiO₂ | 0.09 |
| ZrO₂ | 0.08 |
| Cr₂O₃ | 0.06 |

• an alkaline earth silicate melt comprising the approximate composition:-
CaO 29
MgO 6%
SiO₂ 64.5
+ others to 100%

• and the same alkaline earth silicate melt comprising respectively 1 wt% Na₂O and 2 wt% Na₂O as an additive.

The viscosity/temperature graph of the high soda glass is a smooth line rising as temperature falls.

For the known alkaline earth silicate melt (SW) the viscosity is lower and then rises steeply at a critical temperature value (this is shown as a slope in the graph but that is an artefact of the graphing process - it actually represents a much steeper change).

Addition of Na₂O to the melt moves this rise in viscosity to lower temperatures.

This extends the working range of the melt so that it becomes less dependent upon temperature so increasing the tolerance of the melt to fibre forming conditions. Although the melt stream temperature is important, the melt cools rapidly during the fibre forming process and so a longer range of workability for the composition improves fibre formation. The addition of the alkali metal oxides may also serve to stabilise the melt stream so that for a given set of conditions there is an amount that reduces shot.

Additionally, it is surmised that in small quantities the alkali metal oxides serve to suppress phase separation in alkaline earth silicate fibres.

Since the alkaline earth silicate systems have a two liquid region in their phase diagrams, the applicants suspect that addition of alkali metal oxides may move the melts out of a two-liquid region into a single phase region.

The addition also has the effect of lowering melt stream temperature which may assist in stability.

The effectiveness of these measures is also shown by the amount of shot present in the finished material. In the fibre forming process, droplets of melt are rapidly accelerated (by being flung off a spinning wheel or being blasted by a jet of gas) and form long tails which become the fibres.

However that part of the droplets that does not form fibre remains in the finished material in the form of particles known in the industry as "shot". Shot is generally detrimental to the thermal properties of insulation formed from the fibres, and so it is a general aim in the industry to reduce the quantity of shot.

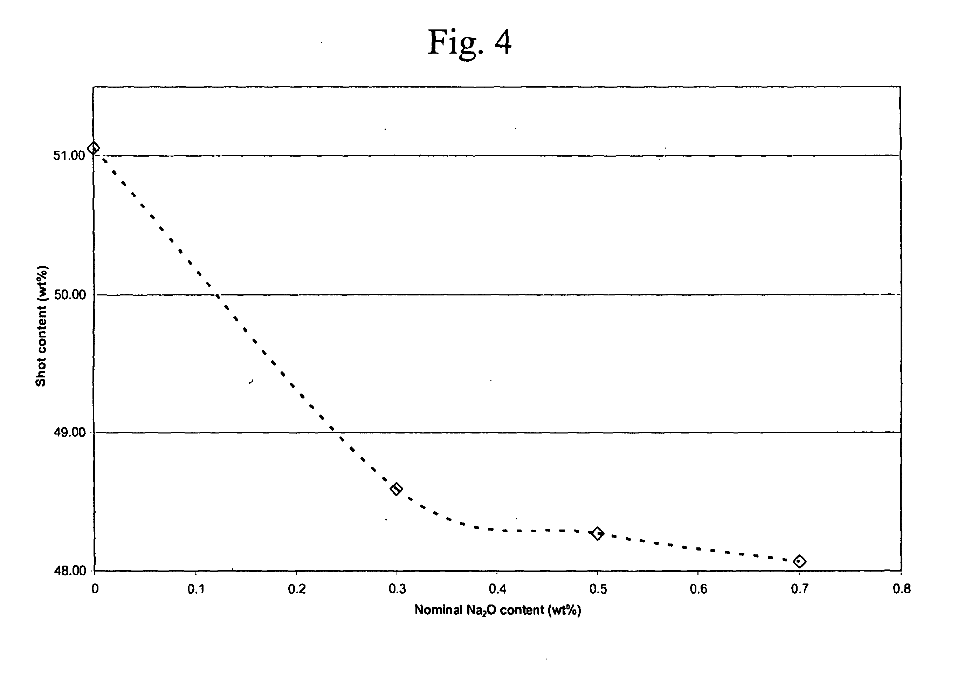

The applicants have found that addition of minor amounts of alkali metal to the melt has the effect of reducing the amount of shot, and this is shown in Fig. 4 for the lanthanum containing materials of Table 1, where it can be seen that the shot content was reduced from ∼51% to ∼48%.

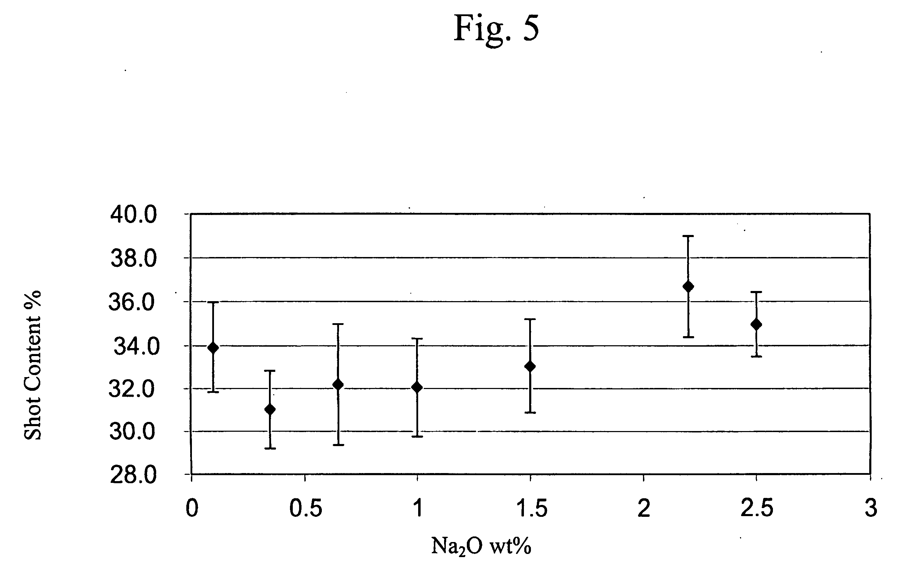

Similar effects apply to lanthanum free materials. Table 5 shows the analysed compositions of a range of alkaline earth silicate fibres (having a lower maximum use temperature) made in accordance with the compositions of WO93/15028 , which were made by spinning using a melt stream temperature of 1380-1420°C, and with a pair of rotating spinners. Fig. 5 shows experimentally determined shot contents with error bars indicating one standard deviation about mean. It can be seen that in the range 0.35 to 1.5 wt% Na₂O, there is a statistical improvement in the shot content as a result of the addition. In particular, a 3 % reduction in shot for a 0.35wt% soda content is significant.

Since there seems no detrimental effect on shrinkage at such levels (and indeed a slight improvement) it can be seen that addition of alkali metal oxides is beneficial for the production of such materials.

**Table 5 - Background**

| Sample | 04-C43-1 | 04C56-7 | 04C46-5 | 04C47-2 | 04C51-6 | 04C50-8 | 04C49-6 |
|---|---|---|---|---|---|---|---|
| Component | | | | | | | |
| Na₂O | 0.11 | 0.35 | 0.66 | 1.01 | 1.47 | 2.03 | 2.46 |
| MgO | 4.78 | 5.90 | 5.18 | 5.47 | 5.71 | 5.76 | 6.20 |
| Al₂O₃ | 1.07 | 0.40 | 0.35 | 0.27 | 0.30 | 0.36 | 0.30 |
| SiO₂ | 65.1 | 65.16 | 65.07 | 64.96 | 65.91 | 66.15 | 65.24 |
| P₂O₅ | 0 | 0.00 | 0.00 | 0.00 | 0.00 | 0.00 | 0.00 |
| K₂O | 0.08 | 0.08 | 0.08 | 0.07 | 0.07 | 0.07 | 0.07 |
| CaO | 28.92 | 27.84 | 28.47 | 28.12 | 26.25 | 25.36 | 24.79 |
| TiO₂ | 0.02 | 0.02 | 0.03 | 0.01 | 0.02 | 0.03 | 0.02 |
| Cr₂O₃ | 0.02 | 0.02 | 0.02 | 0.02 | 0.02 | 0.02 | 0.02 |
| Mn₃O₄ | 0.03 | 0.03 | 0.03 | 0.03 | 0.03 | 0.03 | 0.03 |
| Fe₂O₃ | 0.2 | 0.19 | 0.19 | 0.18 | 0.18 | 0.18 | 0.18 |
| ZnO | 0 | 0.00 | 0.00 | 0.00 | 0.00 | 0.01 | 0.00 |
| SrO | 0.01 | 0.01 | 0.01 | 0.01 | 0.01 | 0.01 | 0.01 |
| ZrO₂ | 0 | 0.00 | 0.00 | 0.00 | 0.00 | 0.00 | 0.00 |
| BaO | 0 | 0.00 | 0.00 | 0.00 | 0.00 | 0.00 | 0.00 |
| HfO₂ | 0 | 0.00 | 0.00 | 0.00 | 0.00 | 0.00 | 0.00 |
| PbO | n/a | n/a | n/a | n/a | n/a | n/a | n/a |
| SnO₂ | n/a | n/a | n/a | n/a | n/a | n/a | n/a |
| CuO | n/a | n/a | n/a | n/a | n/a | n/a | n/a |

| % Linear Shrinkage | | | | | | | |
|---|---|---|---|---|---|---|---|
| 1000°C/ 24 hours | 1.42 | | 1.33 | 1.54 | | 4.18 | |
| 1100°C/ 24 hours | 1.39 | | 1.20 | 1.77 | | 4.85 | |

Addition of the alkali metal should be at levels that do not excessively detrimentally affect other properties of the fibre (e.g. shrinkage), but for different applications what is "excessive" will vary.

The fibres can be used in thermal insulation and may form either a constituent of the insulation (e.g. with other fibres and/or fillers and/or binders) or may form the whole of the insulation. The fibres may be formed into blanket form insulation.

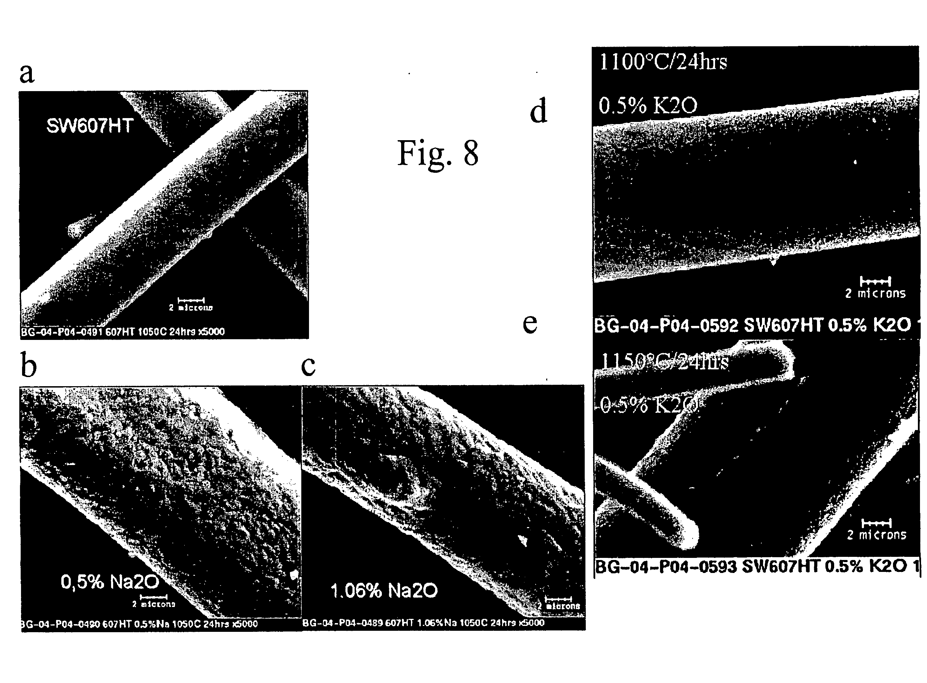

Although initial work was primarily related to the addition of Na₂O to alkaline earth silicate fibres, the applicants discovered that when Na₂O was used as the additive to high calcium - low magnesium fibres it had a tendency to promote crystallisation (and hence powderiness of the fibres) after exposure to temperatures of ∼1000°C. This can be seen in Fig. 8 in which fibre a) -e) had base compositions falling in the region:-

| | |
|---|---|
| SiO₂ | 72 - 75wt% |
| CaO | 22 - 26.5wt% |
| MgO | 0.4 - 1wt% |
| Al₂O₂ | <0.3wt% |
| La₂O₃ | 1.2 - 1.5wt% |

Fibres a), b) and c) show the effect on surface appearance of fibres after exposure to 1050°C for 24 hours on fibres containing increasing amounts of Na₂O (from ∼0 through 0.5wt% to 1.06wt% respectively). As can be seen, the fibre absent Na₂O has a smooth appearance indicating little crystallisation, whereas increasing Na₂O leads to an increase in surface roughness indicative of crystallisation.

In contrast, fibres d) and e) show that at 1100°C a fibre containing ∼0.5wt% K₂O is little different from a fibre free of K₂O, and only starts to show slight surface roughness at 1150°C.

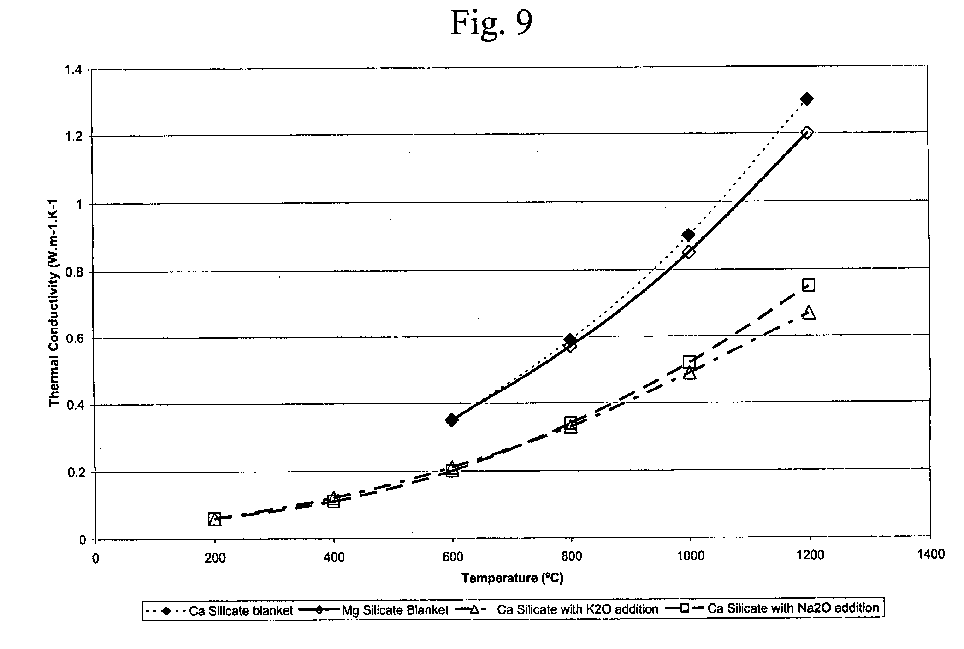

Table 6 shows relative thermal conductivities of blankets having approximate density of 96kg.m⁻³ formed from fibres having the principal ingredients shown. It also shows thermal conductivities of these blankets and these figures are shown in Fig. 9. It can be seen that addition of Na₂O and K₂O seems to result in lower thermal conductivity from the blankets so showing improved insulating ability.

**Table 6**

| | **Ca Silicate blanket-comparative** | **Mg Silicate Blanket -comparative** | **Ca Silicate with K₂O addition** | **Ca Silicate with Na₂O addition comparative** |
|---|---|---|---|---|
| Na₂O | 0.22 | 0 | 0 | 1.06 |
| MgO | 0.4 | 19.13 | 0.74 | 0.96 |
| Al₂O₃ | 0.79 | 1.58 | 0.15 | 0.13 |
| SiO₂ | 73.94 | 79.08 | 74.7 | 72.1 |
| K₂O | 0.06 | 0 | 0.75 | 0 |
| CaO | 22.69 | 0.25 | 22.3 | 24.5 |
| TiO₂ | 0 | 0.06 | 0 | 0 |
| Fe₂O₃ | 0.16 | 0.38 | 0.04 | 0 |
| La₂O₃ | 2.07 | NA | 1.36 | 1.26 |
| | | | | |

| Temperature°C | Thermal Conductivity (w.m⁻¹.K⁻¹) | | | |
|---|---|---|---|---|
| 200 | | | 0.06 | 0.06 |
| 400 | | | 0.12 | 0.11 |
| 600 | 0.35 | 0.35 | 0.21 | 0.2 |
| 800 | 0.59 | 0.57 | 0.33 | 0.34 |
| 1000 | 0.9 | 0.85 | 0.49 | 0.52 |
| 1200 | 1.3 | 1.2 | 0.67 | 0.75 |

The applicants have therefore identified further advantages of the use of alkali metal oxides as additives to alkaline earth silicate blanket materials, and particular advantage to the use of potassium. In particular, to avoid promotion of crystallisation by sodium, at least 75mol% of the alkali metal is potassium. Preferably at least 90%, more preferably at least 95% and still more preferably at least 99% of the alkali metal is potassium.

To test the mutual interaction of La₂O₃ and K₂O on the fibre properties a range of fibres were made into blankets and tested for shrinkage at various temperatures [24 hours at temperature].

It was found that La₂O₃ could be reduced and replaced by K₂O without significant harm to the shrinkage properties of the materials, but this led to onset of crystallisation at lower temperatures than for the La₂O₃ containing materials. However, replacement of La₂O₃ in part by alumina cured this problem. Table 7 indicates a range of materials tested, the temperature at which crystallisation commenced, and temperature at which the crystals reached ∼1µm in size. The materials all had a base composition of approximately 73.1-74.4wt% SiO₂ and 24.6-25.3 wt% CaO with all other ingredients amounting to less than 3% in total.

| **Composition** | **Crystallisation Starts @ °C** | **Crystals Coarsen ∼1mm @ °C** |
|---|---|---|
| CaO-SiO₂-La₂O₃ (1.3%) - comparative | 1100 | 1200 |
| CaO-SiO₂-K₂O (0.75%) | 1000 | 1100 |
| CaO-SiO₂-K₂O (0.75%) -La₂O₃ (1.3%) | 1050 | 1150 |
| CaO-SiO₂-K₂O (0.75%) -La₂O₃ (1.3%) | 1050 | 1150 |
| CaO-SiO₂-K₂O (0.8%) -La₂O₃ (0.4%) | 1050 | 1200 |
| CaO-SiO₂-K₂O (0.6%) -La₂O₃ (0.15%)-Al₂O₃ (0.94%) | 1100 | 1200 |

Accordingly, a preferred range of compositions comprises:-
72%< SiO₂ < 79%
MgO < 10%
13.8% < CaO < 27.8%
Al₂O₃ < 2%
ZrO₂ < 3%
B₂O₃ < 5%
P₂O₅ < 5%
95% <SiO₂ + CaO + MgO + Al₂O₃+ZrO₂ + B₂O₃ +P₂O₅
M₂O >0.2% and <1.5%
in which M is alkali metal of which at least 90mol% is potassium.

More preferably SiO₂ plus CaO > 95%, and usefully a preferred range of compositions comprises:-
72%< SiO₂ < 75%
MgO < 2.5%
24% < CaO < 26%
0.5% < Al₂O₃ < 1.5%
ZrO₂ < 1%
B₂O₃ < 1%
P₂O₅ < 1%
M₂O >0.2% and <1.5%
in which M is alkali metal of which at least 90mol% is potassium.

A particularly preferred range is
SiO₂ 74±2%
MgO < 1%
CaO 25±2%
K₂O 1±0.5%
Al₂O₃ < 1.5%
98% <SiO₂ + CaO + MgO + Al₂O₃+K₂O

And these preferred ranges may comprise additionally R₂O₃ <0.5wt% where R is selected from the group Sc, La, Ce, Pr, Nd, Sm, Eu, Gd, Tb, Dy, Ho, Er, Tm, Yb, Lu, Y or mixtures thereof.

During further trials a second range of fibres was found that gave good results. These fibres had the composition:-
SiO₂ = 67.8-70%
CaO = 27.2-29%
MgO = 1-1.8%
Al₂O₃ = <0.25%
La₂O₃ = 0.81-1.08%
K₂O = 0.47-0.63%

These fibres had a high strength (80 - 105kPa for a blanket of thickness ∼25mm and density ∼128kg.m³) and and low shot content (∼41% total shot).

The fibres may also be used in other applications where alkaline earth silicate fibres are currently employed (e.g. as constituents of friction materials).

## Claims

1. A method of making refractory alkaline earth silicate fibres comprising predominantly silica and alkaline earth oxides and comprising less than 10wt% alumina from a melt, and in which the fibre does not have the composition in mol%:-
| | |
|---|---|
| SiO₂ | 54.3 |
| Al₂O₃ | 0.3 |
| MgO | 4.9 |
| CaO | 12.2 |
| SrO | 7.1 |
| BaO | 9.7 |
| TiO₂ | 10.2 |
| ZrO₂ | 1.0 |
| K₂O | 0.3, |
comprising the inclusion as an intended melt component of alkali metal, in which at least 75mol% of the alkali metal is potassium, to improve the mechanical and/or thermal properties of the fibre,

2. A method, as claimed in Claim 1, in which the amount of alkali metal (M) expressed as the oxide M₂O, is in the range 0.2 mol% to 2.5 mol%, preferably 0.25 to 2 mol%.

3. A method as claimed in Claim 1, in which the alkali metal is included in an amount sufficient to increase the tensile strength of a blanket made using the fibre by >50% over the tensile strength of a blanket free of alkali metal, and less than an amount that will result in an excessive shrinkage at the intended maximum use temperature.

4. A method, as claimed any one of Claims 1 to 3, in which the composition of the alkaline earth silicate fibre and the alkali metal content is such that the shrinkage, as measured by the method of the description, of a vacuum cast preform of the fibres when exposed to 850°C for 24 hours is no greater than 3.5%.

5. A method, as claimed in any one of Claims 1 to 4, in which the composition of the alkaline earth silicate fibre and the alkali metal content is such that the shrinkage, as measured by the method of the description, of a vacuum cast preform of the fibres when exposed to 1000°C for 24 hours is no greater than 3.5%.

6. A method, as claimed in any one of Claims 1 to 5, in which the composition of the alkaline earth silicate fibre and the alkali metal content is such that the shrinkage, as measured by the method of the description, of a vacuum cast preform of the fibres when exposed to 1150°C for 24 hours is no greater than 3.5%.

7. A method, as claimed in any one of Claims 1 to 6, in which the composition of the alkaline earth silicate fibre and the alkali metal content is such that the shrinkage, as measured by the method of the description, of a vacuum cast preform of the fibres when exposed to 1250°C for 24 hours is no greater than 3.5%.

8. A method, as claimed in one of Claims 1 to 7, in which the composition of the alkaline earth silicate fibre and the alkali metal content is such that the shrinkage, as measured by the method of the description, of a vacuum cast preform of the fibres when exposed to 1150°C for 24 hours is no greater than 2 times the shrinkage of a fibre of the composition free of alkali metal.

9. A method, as claimed in Claim 8, in which the composition of the alkaline earth silicate fibre and the alkali metal content is such that the shrinkage, as measured by the method of the description, of a vacuum cast preform of the fibres when exposed to 1150°C for 24 hours is no greater than 1.2 times the shrinkage of a fibre of the composition free of alkali metal.

10. A method, as claimed in any preceding claim, in which the composition of the alkaline earth silicate fibre and the alkali metal content is such that the shrinkage, as measured by the method of the description, of a vacuum cast preform of the fibres when exposed to 1400°C for 24 hours is no greater than 3.5%.

11. A method, as claimed in any preceding claim, in which the inclusion as an intended melt component of the alkali metal results in a reduction in shot content.

12. A method, as claimed in any one of Claims 1 to 10, in which the alkali metal (M) is present in an amount expressed as the oxide M₂O less than 2 mol%.

13. A method, as claimed in Claim 12, in which the alkali metal is present in an amount less than 1.5 mol%.

14. A method, as claimed in Claim 13, in which the alkali metal is present in an amount less than 1 mol%.

15. A method, as claimed in Claim 14, in which the alkali metal is present in an amount less than 0.75 mol%.

16. A method, as claimed in any one of Claims 1 to 15, in which the alkali metal is present in an amount greater than or equal to 0.3 mol%.

17. A method, as claimed in Claim 16, in which the alkali metal is present in an amount greater than or equal to 0.4 mol%.

18. A method, as claimed in Claim 17, in which the alkali metal is present in an amount greater than or equal to 0.5 mol%.

19. A method, as claimed in Claim 18, in which the alkali metal is present in an amount greater than or equal to 0.6 mol%.

20. A method, as claimed in any preceding Claim, in which at least 90mol% of the alkali metal is potassium.

21. A method, as claimed in Claim 20, in which at least 95mol% of the alkali metal is potassium.

22. A method, as claimed in Claim 21, in which at least 99mol% of the alkali metal is potassium.

23. Refractory alkaline earth silicate fibres obtainable from a melt, and comprising predominantly silica and alkaline earth oxides and comprising less than 10wt% alumina and comprising alkali metal, in which at least 75mol% of the alkali metal is potassium and in which the fibre does not have the composition in mol%:-
| | |
|---|---|
| SiO₂ | 54.3 |
| Al₂O₃ | 0.3 |
| MgO | 4.9 |
| CaO | 12.2 |
| SrO | 7.1 |
| BaO | 9.7 |
| TiO₂ | 10.2 |
| ZrO₂ | 1.0 |
| K₂O | 0.3. |

24. Fibres as claimed in Claim 23, in which the amount of alkali metal (M) expressed as the oxide M₂O, is in the range 0.2 mol% to 2.5 mol%, preferably 0.25 to 2 mol%.

25. Fibres as claimed in Claim 23, having the composition in weight percent
65% < SiO₂ < 86%
MgO < 10%
13.5% < CaO < 27.5%
Al₂O₃ < 2%
ZrO₂ < 3%
B₂O₃ < 5%
P₂O₅ < 5%
72% < SiO₂+ZrO₂+B₂O₃+5*P₂O₅
95% <SiO₂ + CaO + MgO + Al₂O₃+ZrO₂ + B₂O₃ +P₂O₅
M₂O >0.5%
in which M is alkali metal.

26. Fibres, as claimed in Claim 25, in which SiO₂ >72wt%.

27. Fibres, as claimed in Claim 26, in which:-
0.5wt% < M₂O < 1.5wt%

28. Fibres as claimed in Claim 23, having the composition in weight percent
75%< SiO₂ < 86%
MgO < 10%
13.8% < CaO < 27.8%
Al₂O₃ < 2%
ZrO₂ < 3%
B₂O₃ < 5%
P₂O₅ < 5%
75% < SiO₂+ZrO₂+B₂O₃+5*P₂O₅
95% <SiO₂ + CaO + MgO + Al₂O₃+ZrO₂ + B₂O₃ +P₂O₅
M₂O >0.2%
in which M is alkali metal.

29. Fibres, as claimed in Claim 28, in which:-
0.2wt% < M₂O < 1.5wt%.

30. Fibres, as claimed in any one of Claims 25 to 29, in which:-
97.5wt% <SiO₂ + CaO + MgO + Al₂O₃+ZrO₂ + B₂O₃ + P₂O₅ + M₂O.

31. Fibres, as claimed in any one of Claims 25 to 30, comprising additionally
0.1wt% < R₂O₃ <4wt%
where R is selected from the group Sc, La, Ce, Pr, Nd, Sm, Eu, Gd, Tb, Dy, Ho, Er, Tm, Yb, Lu, Y or mixtures thereof

32. Fibres, as claimed in any one of Claims 25 to 31, in which at least 90mol% of the alkali metal is potassium.

33. Fibres as claimed in Claim 32, in which at least 95mol% of the alkali metal is potassium.

34. Fibres as claimed in Claim 32, in which at least 99mol% of the alkali metal is potassium.

35. Fibres, as claimed in any one of Claims 25 to 34, in which M₂O is present in an amount less than 2.5 mol%.

36. Fibres, as claimed in Claim 35, in which M₂O is present in an amount less than 2mol%.

37. Fibres, as claimed in Claim 36, in which M₂O is present in an amount less than 1.5mol%.

38. Fibres, as claimed in Claim 37, in which M₂O is present in an amount less than 1mol%.

39. Fibres, as claimed in Claim 38, in which M₂O is present in an amount less than 0.75mol%.

40. Fibres, as claimed in any of Claims 25 to 39, in which the alkali metal is present in an amount greater than or equal to 0.3 mol%.

41. Fibres, as claimed in Claim 40, in which the alkali metal is present in an amount greater than or equal to 0.4 mol%.

42. Fibres, as claimed in Claim 41, in which the alkali metal is present in an amount greater than or equal to 0.5 mol%.

43. Fibres, as claimed in Claim 42, in which the alkali metal is present in an amount greater than or equal to 0.6 mol%.

44. Fibres, as claimed in any one of Claims 25 to 43, in which the amount of MgO is less than 2 wt%.

45. Fibres as claimed in Claim 23 having the composition in weight percent
72%< SiO₂ < 79%
MgO < 10%
13.8% < CaO < 27.8%
Al₂O₃ < 2%
ZrO₂ < 3%
B₂O₃ < 5%
P₂O₅ < 5%
95% <SiO₂ + CaO + MgO + Al₂O₃+ZrO₂ + B₂O₃ +P₂O₅
M₂O >0.2% and <1.5%
in which M is alkali metal of which at least 90mol% is potassium.

46. Fibres as claimed in Claim 45 in which SiO₂ plus CaO > 95%

47. Fibres as claimed in Claim 46, having the composition in weight percent
72%< SiO₂ < 75%
MgO < 2.5%
24% < CaO < 26%
0.5% < Al₂O₃ < 1.5%
ZrO₂ < 1%
B₂O₃ < 1%
P₂O₅ < 1%
M₂O >0.2% and <1.5%
in which M is alkali metal of which at least 90mol% is potassium.

48. Fibres as claimed in Claim 45 or Claim 46, having the composition in weight percent:-
SiO₂ 74±2%
MgO < 1%
CaO 25±2%
K₂O 1±0.5%
Al₂O₃ < 1.5%
98% <SiO₂ + CaO + MgO + Al₂O₃+K₂O.

49. Fibres as claimed in any one of Claims 45 to 48, comprising additionally
R₂O₃ <0.5wt%
where R is selected from the group Sc, La, Ce, Pr, Nd, Sm, Eu, Gd, Tb, Dy, Ho, Er, Tm, Yb, Lu, Y or mixtures thereof

50. Fibres as claimed in Claim 23, having the composition in wt%:-
SiO₂ = 67.8-70%
CaO = 27.2-29%
MgO = 1-1.8%
Al₂O₃ = <0.25%
La₂O₃ = 0.81-1.08%
K₂O = 0.47-0.63%

51. Thermal insulation comprising fibres as claimed in any of Claims 25 to 50 or made by the method of any one of Claims 1 to 22.

52. Thermal insulation, as claimed in Claim 51, in the form of a blanket.

## Patentansprüche

1. Verfahren zur Herstellung von hitzebeständigen Erdalkalimetallsilicat-Fasern, die vorwiegend Siliciumdioxid und Erdalkalimetalloxide sowie weniger als 10 Gew.-% Aluminiumoxid umfassen, aus einer Schmelze, wobei die Faser nicht diese Zusammensetzung in Mol-% aufweist:
| | |
|---|---|
| SiO₂ | 54,3 |
| Al₂O₃ | 0,3 |
| MgO | 4,9 |
| CaO | 12,2 |
| SrO | 7,1 |
| BaO | 9,7 |
| TiO₂ | 10,2 |
| ZrO₂ | 1,0 |
| K₂O | 0,3 |
umfassend die Beigabe von Alkalimetall als beabsichtigter Bestandteil der Schmelze, wobei wenigstens 75 Mol-% des Alkalimetalls Kalium sind, zur Verbesserung der mechanischen und/oder thermischen Eigenschaften der Faser.

2. Verfahren nach Anspruch 1, wobei die Menge des Alkalimetalls (M), ausgedrückt als Oxid M₂O, im Bereich von 0,2 Mol-% bis 2,5 Mol-%, vorzugsweise 0,25 bis 2 Mol-% liegt.

3. Verfahren nach Anspruch 1, wobei das Alkalimetall in einer Menge enthalten ist, die ausreicht, die Zugfestigkeit einer unter Verwendung der Faser hergestellten Decke um >50% gegenüber der Zugfestigkeit einer von Alkalimetall freien Decke zu erhöhen, und in weniger als einer Menge, die zu übermäßiger Schrumpfung bei der beabsichtigten maximalen Gebrauchstemperatur führt.

4. Verfahren nach einem der Ansprüche 1 bis 3, wobei die Zusammensetzung der Erdalkalimetallsilicat-Faser und der Alkalimetall-Gehalt derart sind, dass die Schrumpfung einer vakuumgegossenen Vorform der Fasern, wie gemessen mit Hilfe des Verfahrens in der Beschreibung, bei 24-stündiger Einwirkung von 850°C nicht größer als 3,5% ist.

5. Verfahren nach einem der Ansprüche 1 bis 4, wobei die Zusammensetzung der Erdalkalimetallsilicat-Faser und der Alkalimetall-Gehalt derart sind, dass die Schrumpfung einer vakuumgegossenen Vorform der Fasern, wie gemessen mit Hilfe des Verfahrens in der Beschreibung, bei 24-stündiger Einwirkung von 1000°C nicht größer als 3,5% ist.

6. Verfahren nach einem der Ansprüche 1 bis 5, wobei die Zusammensetzung der Erdalkalimetallsilicat-Faser und der Alkalimetall-Gehalt derart sind, dass die Schrumpfung einer vakuumgegossenen Vorform der Fasern, wie gemessen mit Hilfe des Verfahrens in der Beschreibung, bei 24-stündiger Einwirkung von 1150°C nicht größer als 3,5% ist.

7. Verfahren nach einem der Ansprüche 1 bis 6, wobei die Zusammensetzung der Erdalkalimetallsilicat-Faser und der Alkalimetall-Gehalt derart sind, dass die Schrumpfung einer vakuumgegossenen Vorform der Fasern, wie gemessen mit Hilfe des Verfahrens in der Beschreibung, bei 24-stündiger Einwirkung von 1250°C nicht größer als 3,5% ist.

8. Verfahren nach einem der Ansprüche 1 bis 7, wobei die Zusammensetzung der Erdalkalimetallsilicat-Faser und der Alkalimetall-Gehalt derart sind, dass die Schrumpfung einer vakuumgegossenen Vorform der Fasern, wie gemessen mit Hilfe des Verfahrens in der Beschreibung, bei 24-stündiger Einwirkung von 1150°C nicht größer ist als das 2-fache der Schrumpfung einer Faser der alkalimetallfreien Zusammensetzung.

9. Verfahren nach Anspruch 8, wobei die Zusammensetzung der Erdalkalimetallsilicat-Faser und der Alkalimetall-Gehalt derart sind, dass die Schrumpfung einer vakuumgegossenen Vorform der Fasern, wie gemessen mit Hilfe des Verfahrens in der Beschreibung, bei 24-stündiger Einwirkung von 1150°C nicht größer ist als das 1,2-fache der Schrumpfung einer Faser der alkalimetallfreien Zusammensetzung.

10. Verfahren nach einem der vorstehenden Ansprüche, wobei die Zusammensetzung der Erdalkalimetallsilicat-Faser und der Alkalimetall-Gehalt derart sind, dass die Schrumpfung einer vakuumgegossenen Vorform der Fasern, wie gemessen mit Hilfe des Verfahrens in der Beschreibung, bei 24-stündiger Einwirkung von 1400°C nicht größer als 3,5% ist.

11. Verfahren nach einem der vorstehenden Ansprüche, wobei die Beigabe des Alkalimetalls als beabsichtigter Bestandteil der Schmelze zu einer Verringerung des Perlengehalts führt.

12. Verfahren nach einem der Ansprüche 1 bis 10, wobei das Alkalimetall (M) in einer Menge, ausgedrückt als Oxid M₂O, von weniger als 2 Mol-% vorhanden ist.

13. Verfahren nach Anspruch 12, wobei das Alkalimetall in einer Menge von weniger als 1,5 Mol-% vorliegt.

14. Verfahren nach Anspruch 13, wobei das Alkalimetall in einer Menge von weniger als 1 Mol-% vorliegt.

15. Verfahren nach Anspruch 14, wobei das Alkalimetall in einer Menge von weniger als 0,75 Mol-% vorliegt.

16. Verfahren nach einem der Ansprüche 1 bis 15, wobei das Alkalimetall in einer Menge größer als oder gleich 0,3 Mol-% vorhanden ist.

17. Verfahren nach Anspruch 16, wobei das Alkalimetall in einer Menge größer als oder gleich 0,4 Mol-% vorhanden ist.

18. Verfahren nach Anspruch 17, wobei das Alkalimetall in einer Menge größer als oder gleich 0,5 Mol-% vorhanden ist.

19. Verfahren nach Anspruch 18, wobei das Alkalimetall in einer Menge größer als oder gleich 0,6 Mol-% vorhanden ist.

20. Verfahren nach einem der vorstehenden Ansprüche, wobei wenigstens 90 Mol-% des Alkalimetalls Kalium sind.

21. Verfahren nach Anspruch 20, wobei wenigstens 95 Mol-% des Alkalimetalls Kalium sind.

22. Verfahren nach Anspruch 21, wobei wenigstens 99 Mol-% des Alkalimetalls Kalium sind.

23. Hitzebeständige Erdalkalimetallsilicat-Fasern, die aus einer Schmelze erhältlich sind und vorwiegend Siliciumdioxid und Erdalkalimetalloxide sowie weniger als 10 Gew.-% Aluminiumoxid umfassen und Alkalimetall umfassen, wobei wenigstens 75 Mol-% des Alkalimetalls Kalium sind und die Faser nicht diese Zusammensetzung in Mol-% aufweist:
| | |
|---|---|
| SiO₂ | 54,3 |
| Al₂O₃ | 0,3 |
| MgO | 4,9 |
| CaO | 12,2 |
| SrO | 7,1 |
| BaO | 9,7 |
| TiO₂ | 10,2 |
| ZrO₂ | 1,0 |
| K₂O | 0,3. |

24. Fasern nach Anspruch 23, wobei die Menge des Alkalimetalls (M), ausgedrückt als Oxid M₂O, im Bereich von 0,2 Mol-% bis 2,5 Mol-%, vorzugsweise 0,25 bis 2 Mol-% liegt.

25. Fasern nach Anspruch 23 mit der Zusammensetzung in Gewichtsprozent:
65% < SiO₂ < 86%
MgO < 10%
13,5% < CaO < 27,5%
Al₂O₃ < 2%
ZrO₂ < 3%
B₂O₃ < 5%
P₂O₅ < 5%
72% < SiO₂ + ZrO₂ + B₂O₃ + 5*P₂O₅
95% < SiO₂ + CaO + MgO + Al₂O₃ + ZrO₂ + B₂O₃ + P₂O₅
M₂O > 0,5%,
wobei M ein Alkalimetall ist.

26. Fasern nach Anspruch 25, wobei SiO₂ > 72 Gew.-%.

27. Fasern nach Anspruch 26, wobei
0,5 Gew.-% < M₂O < 1,5 Gew.-%.

28. Fasern nach Anspruch 23 mit der Zusammensetzung in Gewichtsprozent:
75% < SiO₂ < 86%
MgO < 10%
13,8% < CaO < 27,8%
Al₂O₃ < 2%
ZrO₂ < 3%
B₂O₃ < 5%
P₂O₅ < 5%
75% < SiO₂ + ZrO₂ + B₂O₃ + 5*P₂O₅
95% < SiO₂ + CaO + MgO + Al₂O₃ + ZrO₂ + B₂O₃ + P₂O₅
M₂O > 0,2%,
wobei M ein Alkalimetall ist.

29. Fasern nach Anspruch 28, wobei
0,2 Gew.-% < M₂O < 1,5 Gew.-%.

30. Fasern nach einem der Ansprüche 25 bis 29, wobei
97,5 Gew.-% < SiO₂ + CaO + MgO + Al₂O₃ + ZrO₂ + B₂O₃ + P₂O₅ + M₂O.

31. Fasern nach einem der Ansprüche 25 bis 30, zusätzlich umfassend
0,1 Gew.-% < R₂O₃ < 4 Gew.-%,
wobei R ausgewählt ist aus der Gruppe Sc, La, Ce, Pr, Nd, Sm, Eu, Gd, Tb, Dy, Ho, Er, Tm, Yb, Lu, Y oder Mischungen derselben.

32. Fasern nach einem der Ansprüche 25 bis 31, wobei wenigstens 90 Mol-% des Alkalimetalls Kalium sind.

33. Fasern nach Anspruch 32, wobei wenigstens 95 Mol-% des Alkalimetalls Kalium sind.

34. Fasern nach Anspruch 32, wobei wenigstens 99 Mol-% des Alkalimetalls Kalium sind.

35. Fasern nach einem der Ansprüche 25 bis 34, wobei M₂O in einer Menge von weniger als 2,5 Mol-% vorhanden ist.

36. Fasern nach Anspruch 35, wobei M₂O in einer Menge von weniger als 2 Mol-% vorhanden ist.

37. Fasern nach Anspruch 36, wobei M₂O in einer Menge von weniger als 1,5 Mol-% vorhanden ist.

38. Fasern nach Anspruch 37, wobei M₂O in einer Menge von weniger als 1 Mol-% vorhanden ist.

39. Fasern nach Anspruch 38, wobei M₂O in einer Menge von weniger als 0,75 Mol-% vorhanden ist.

40. Fasern nach einem der Ansprüche 25 bis 39, wobei das Alkalimetall in einer Menge größer als oder gleich 0,3 Mol-% vorhanden ist.

41. Fasern nach Anspruch 40, wobei das Alkalimetall in einer Menge größer als oder gleich 0,4 Mol-% vorhanden ist.

42. Fasern nach Anspruch 41, wobei das Alkalimetall in einer Menge größer als oder gleich 0,5 Mol-% vorhanden ist.

43. Fasern nach Anspruch 42, wobei das Alkalimetall in einer Menge größer als oder gleich 0,6 Mol-% vorhanden ist.

44. Fasern nach einem der Ansprüche 25 bis 43, wobei die Menge an MgO kleiner als 2 Gew.-% ist.

45. Fasern nach Anspruch 23 mit der Zusammensetzung in Gewichtsprozent:
72% < SiO₂ < 79%
MgO < 10%
13,8% < CaO < 27,8%
Al₂O₃ < 2%
ZrO₂ < 3%
B₂O₃ < 5%
P₂O₅ < 5%
95% < SiO₂ + CaO + MgO + Al₂O₃ + ZrO₂ + B₂O₃ + P₂O₅
M₂O > 0,2% und < 1,5%,
wobei M ein Alkalimetall ist, wovon wenigstens 90 Mol-% Kalium sind.

46. Fasern nach Anspruch 45, wobei SiO₂ + CaO > 95%.

47. Fasern nach Anspruch 46 mit der Zusammensetzung in Gewichtsprozent:
72% < SiO₂ < 75%
MgO < 2,5%
24% < CaO < 26%
0,5% < Al₂O₃ < 1,5%
ZrO₂ < 1 %
B₂O₃ < 1%
P₂O₅ < 1%
M₂O > 0,2% und < 1,5%,
wobei M ein Alkalimetall ist, wovon wenigstens 90 Mol-% Kalium sind.

48. Fasern nach Anspruch 45 oder 46 mit der Zusammensetzung in Gewichtsprozent:
SiO₂ 74 ± 2%
MgO < 1%
CaO 25 ± 2%
K₂O 1 ± 0,5%
Al₂O₃ < 1,5%
98% < SiO₂ + CaO + MgO + Al₂O₃ + K₂O.

49. Fasern nach einem der Ansprüche 45 bis 48, zusätzlich umfassend
R₂O₃ < 0,5 Gew.-%,
wobei R ausgewählt ist aus der Gruppe Sc, La, Ce, Pr, Nd, Sm, Eu, Gd, Tb, Dy, Ho, Er, Tm, Yb, Lu, Y oder Mischungen derselben.

50. Fasern nach Anspruch 23 mit der Zusammensetzung in Gewichtsprozent:
SiO₂ = 67,8 - 70%
CaO = 27,2 - 29%
MgO= 1 - 1,8%
Al₂O₃ = <0,25%
La₂O₃ = 0,81 - 1,08%
K₂O = 0,47 - 0,63%.

51. Thermische Isolierung, umfassend Fasern nach einem der Ansprüche 25 bis 50 oder Fasern, die mit Hilfe des Verfahrens nach einem der Ansprüche 1 bis 22 hergestellt sind.

52. Thermische Isolierung nach Anspruch 51 in Form einer Decke.

## Revendications

1. Procédé de préparation de fibres de silicates alcalinoterreux réfractaires comprenant principalement de la silice et des oxydes alcalinoterreux et comprenant moins de 10 % en poids d'alumine d'une masse fondue et dans lequel la fibre n'a pas la composition en % en mole :
| | |
|---|---|
| SiO₂ | 54,3 |
| Al₂O₃ | 0,3 |
| MgO | 4,9 |
| CaO | 12,2 |
| SrO | 7,1 |
| BaO | 9,7 |
| TiO₂ | 10,2 |
| ZrO₂ | 1, 0 |
| K₂O | 0, 3 |
comprenant l'inclusion, comme composant fondu visé, de métal alcalin, dont au moins 75 % en mole sont du potassium, pour améliorer les propriétés mécaniques et/ou thermiques de la fibre.

2. Procédé selon la revendication 1, dans lequel la quantité de métal alcalin (M) exprimé sous la forme de l'oxyde M₂O, se situe dans la plage de 0,2 % en mole à 2,5 % en mole, de préférence de 0,25 à 2 % en mole.

3. Procédé selon la revendication 1, dans lequel le métal alcalin est inclus en quantité suffisante pour augmenter la résistance à la traction d'une couverture élaborée en utilisant la fibre de plus de 50 % au-dessus de la résistance à la traction d'une couverture exempte de métal alcalin, et à raison de moins d'une quantité qui entraînera une contraction excessive à la température d'utilisation maximale visée.

4. Procédé selon l'une quelconque des revendications 1 à 3, dans lequel la composition de la fibre de silicates alcalinoterreux et la teneur en métal alcalin sont telles que la contraction, comme mesurée par le procédé de la description, d'une préforme coulée sous vide des fibres lors d'une exposition à 850 °C pendant 24 heures ne dépasse pas 3,5 %.

5. Procédé selon l'une quelconque des revendications 1 à 4, dans lequel la composition de la fibre de silicates alcalinoterreux et la teneur en métal alcalin sont telles que la contraction, comme mesurée par le procédé de la description, d'une préforme coulée sous vide des fibres lors d'une exposition à 1000 °C pendant 24 heures ne dépasse pas 3,5 %.

6. Procédé selon l'une quelconque des revendications 1 à 5, dans lequel la composition de la fibre de silicates alcalinoterreux et la teneur en métal alcalin sont telles que la contraction, comme mesurée par le procédé de la description, d'une préforme coulée sous vide des fibres lors d'une exposition à 1150 °C pendant 24 heures ne dépasse pas 3,5 %.

7. Procédé selon l'une quelconque des revendications 1 à 6, dans lequel la composition de la fibre de silicates alcalinoterreux et la teneur en métal alcalin sont telles que la contraction, comme mesurée par le procédé de la description, d'une préforme coulée sous vide des fibres lors d'une exposition à 1250 °C pendant 24 heures ne dépasse pas 3,5 %.

8. Procédé selon l'une quelconques des revendications 1 à 7, dans lequel la composition de la fibre de silicates alcalinoterreux et la teneur en métal alcalin sont telles que la contraction, comme mesurée par le procédé de la description, d'une préforme coulée sous vide des fibres lors d'une exposition à 1150 °C pendant 24 heures ne dépasse pas deux fois la contraction d'une fibre de la composition exempte de métal alcalin.

9. Procédé selon la revendication 8, dans lequel la composition de la fibre de silicates alcalinoterreux et la teneur en métal alcalin sont telles que la contraction, comme mesurée par le procédé de la description, d'une préforme coulée sous vide des fibres lors d'une exposition à 1150 °C pendant 24 heures ne dépasse pas 1,2 fois la contraction d'une fibre de la composition exempte de métal alcalin.

10. Procédé selon l'une quelconque des revendications précédentes, dans lequel la composition de la fibre de silicates alcalinoterreux et la teneur en métal alcalin sont telles que la contraction, comme mesurée par le procédé de la description, d'une préforme coulée sous vide des fibres lors d'une exposition à 1400 °C pendant 24 heures ne dépasse pas 3,5 %.

11. Procédé selon l'une quelconque des revendications précédentes, dans lequel l'inclusion comme composant fondu visé du métal alcalin entraîne une réduction de la teneur en grenaille.

12. Procédé selon l'une quelconque des revendications 1 à 10, dans lequel le métal alcalin (M) est présent en quantité exprimée sous la forme de l'oxyde M₂O inférieur à 2 % en mole.

13. Procédé selon la revendication 12, dans lequel le métal alcalin est présent en quantité inférieure à 1,5 % en mole.

14. Procédé selon la revendication 13, dans lequel le métal alcalin est présent en quantité inférieure à 1 % en mole.

15. Procédé selon la revendication 14, dans lequel le métal alcalin est présent en quantité inférieure à 0,75 % en mole.

16. Procédé selon l'une quelconque des revendications 1 à 15, dans lequel le métal alcalin est présent en quantité supérieure ou égale à 0,3 % en mole.

17. Procédé selon la revendication 16, dans lequel le métal alcalin est présent en quantité supérieure ou égale à 0,4 % en mole.

18. Procédé selon la revendication 17, dans lequel le métal alcalin est présent en quantité supérieure ou égale à 0,5 % en mole.

19. Procédé selon la revendication 18, dans lequel le métal alcalin est présent en quantité supérieure ou égale à 0,6 % en mole.

20. Procédé selon l'une quelconque des revendications précédentes, dans lequel au moins 90 % en mole du métal alcalin est du potassium.

21. Procédé selon la revendication 20, dans lequel au moins 95 % en mole du métal alcalin est du potassium.

22. Procédé selon la revendication 21, dans lequel au moins 99 % en mole du métal alcalin est du potassium.

23. Fibres de silicates alcalinoterreux réfractaires pouvant être obtenues à partir d'une masse fondue et comprenant principalement de la silice et des oxydes alcalinoterreux et comprenant moins de 10 % en poids d'alumine et comprenant un métal alcalin, dans lequel au moins 75 % en mole du métal alcalin est du potassium et dans lequel la fibre n'a pas la composition en % en mole :
| | |
|---|---|
| SiO₂ | 54,3 |
| Al₂O₃ | 0,3 |
| MgO | 4,9 |
| CaO | 12,2 |
| SrO | 7,1 |
| BaO | 9,7 |
| TiO₂ | 10,2 |
| ZrO₂ | 1, 0 |
| K₂O | 0, 3. |

24. Fibres selon la revendication 23, dans lesquelles la quantité de métal alcalin (M) exprimée sous la forme d'oxyde M₂O, se situe dans la plage de 0,2 % en mole à 2,5 % en mole, de préférence de 2,5 à 2 % en mole.

25. Fibres selon la revendication 23, ayant la composition en pour-cent en poids :
65 % < SiO₂ < 86 %
MgO < 10%
13,5 % < CaO < 27,5 %
Al₂O₃ < 2 %
ZrO₂ < 3 %
B₂O₃ < 5 %
P₂O₅ < 5 %
72 % < SiO₂ + ZrO₂ + B_{2O3} + 5*P₂O₅
95 % < SiO₂ + CaO + MgO + Al₂O₃ + ZrO₂ + B₂O₃ + P₂O₅
M₂O > 0,5 %
où M est un métal alcalin.

26. Fibres selon la revendication 25, dans lesquelles SiO₂ > 72 % en poids.

27. Fibres selon la revendication 26, dans lesquelles :
0,5 % en poids < M₂O < 1,5 % en poids.

28. Fibres selon la revendication 23, ayant la composition en pour-cent en poids :
75 % < SiO₂ < 86 %
MgO < 10%
13,8 % < CaO < 27,8 %
Al₂O₃ < 2 %
ZrO2 < 3 %
B₂O₃ < 5 %
P₂O₅ < 5 %
75 % < SiO₂ + ZrO₂ + B₂O₃ + 5^{*}P₂O₅
95 % < SiO₂ + CaO + MgO + Al₂O₃ + ZrO₂ + B₂O₃ +P₂O₅
M₂O >0,2 %
où M est un métal alcalin.

29. Fibres selon la revendication 28, dans lesquelles :
0,2 % en poids < M₂O < 1,5 % en poids.

30. - Fibres selon l'une quelconque des revendications 25 à 29, dans lesquelles :
97,5 % en poids < SiO₂ + CaO + MgO + Al₂O₃ + ZrO₂ + B₂O₃ + P₂O₅ + M₂O.

31. - Fibres selon l'une quelconque des revendications 25 à 30, comprenant de plus :
0,1 % en poids < R₂O₃ < 4 % en poids
où R est choisi dans le groupe suivant : Sc, La, Ce, Pr, Nd, Sm, Eu, Gd, Tb, Dy, Ho, Er, Tm, Yb, Lu, Y ou leurs mélanges.

32. Fibres selon l'une quelconque des revendications 25 à 31, dans lesquelles au moins 90 % en mole du métal alcalin sont du potassium.

33. Fibres selon la revendication 32, dans lesquelles au moins 95 % en mole du métal alcalin sont du potassium.

34. Fibres selon la revendication 32, dans lesquelles au moins 99 % en mole du métal alcalin sont du potassium.

35. Fibres selon l'une quelconque des revendications 25 à 34, dans lesquelles M₂O est présent en quantité inférieure à 2,5 % en mole.

36. Fibres selon la revendication 35, dans lesquelles M₂O est présent en quantité inférieure à 2 % en mole.

37. Fibres selon la revendication 36, dans lesquelles M₂O est présent en quantité inférieure à 1,5 % en mole.

38. Fibres selon la revendication 37, dans lesquelles M₂O est présent en quantité inférieure à 1 % en mole.

39. Fibres selon la revendication 38, dans lesquelles M₂O est présent en quantité inférieure à 0,75 % en mole.

40. Fibres selon l'une quelconque des revendications 25 à 39, dans lesquelles le métal alcalin est présent en quantité supérieure ou égale à 0,3 % en mole.

41. Fibres selon la revendication 40, dans lesquelles le métal alcalin est présent en quantité supérieure ou égale à 0,4 % en mole.

42. Fibres selon la revendication 41, dans lesquelles le métal alcalin est présent en quantité supérieure ou égale à 0,5 % en mole.

43. Fibres selon la revendication 42, dans lesquelles le métal alcalin est présent en quantité supérieure ou égale à 0,6 % en mole.

44. Fibres selon l'une quelconque des revendications 25 à 43, dans lesquelles la quantité de MgO est inférieure à 2 % en poids.

45. Fibres selon la revendication 23, ayant la composition en pour-cent en poids :
72 % < SiO₂ < 79 %
MgO < 10 %
13,8 % < CaO < 27,8 %
Al₂O₃ < 2 %
ZrO2 < 3 %
B₂O₃ < 5 %
P₂O₅ < 5 %
95 % < SiO₂ + CaO + MgO + Al₂O₃ + ZrO₂ + B₂O₃ + P₂O₅
M₂O > 0,2 % et < 1,5 %
où M est un métal alcalin dont au moins 90 % en mole sont du potassium.

46. Fibres selon la revendication 45, dans lesquelles SiO₂ plus CaO > 95 %.

47. Fibres selon la revendication 46, ayant la composition en pour-cent en poids :
72 % < SiO₂ < 75 %
MgO < 2,5 %
24 % < CaO < 26 %
0,5 % < Al₂O₃ < 1,5 %
ZrO₂ < 1 %
B₂O₃ < 1 %
P₂O₅< 1 %
M₂O > 0,2 % et < 1,5 %
où M est un métal alcalin dont au moins 90 % en mole sont du potassium.

48. Fibres selon la revendication 45 ou la revendication 46, ayant la composition en pour-cent en poids :
SiO₂ 74 ± 2 %
MgO < 1 %
CaO 25 ± 2 %
K₂O 1 ± 0, 5 %
Al₂O₃ < 1,5 %
98 % < SiO₂ + CaO + MgO + Al₂O₃ + K₂O.

49. Fibres selon l'une quelconque des revendications 45 à 48, comprenant de plus :
R₂O₃ < 0,5 % en poids
où R est choisi dans le groupe suivant : Sc, La, Ce, Pr, Nd, Sm, Eu, Gd, Tb, Dy, Ho, Er, Tm, Yb, Lu, Y ou leurs mélanges.

50. Fibres selon la revendication 23, ayant la composition en % en poids :
SiO₂ = 67,8-70 %
CaO = 27,2-29 %
MgO = 1-1,8 %
Al₂O₃ = < 0,25 %
La₂O₃ = 0,81-1,08 %
K₂O = 0,47-0,63 %.

51. Isolation thermique comprenant des fibres selon l'une quelconque des revendications 25 à 50 ou élaborée par le procédé selon l'une quelconque des revendications 1 à 22.

52. Isolation thermique selon la revendication 51, sous la forme d'une couverture.
